# EUROPEAN PATENT APPLICATION

(11) **EP 4 837 810 A1**
(43) Date of publication of application: **11.11.2026**
(21) Application number: 24916378.3
(22) Date of filing: 20.08.2024
(51) Int. Cl.: B60W 60/00, B60W 50/023

(54) **INTELLIGENT DRIVING METHOD, INTELLIGENT DRIVING DOMAIN CONTROLLER, AND SENSOR**

(30) Priority: 09.01.2024 CN 202410033960
(71) Applicant: Yinwang Intelligent Technologies Co., Ltd., Shenzhen, Guangdong 518110 (CN)
(72) Inventor: HUANG, Ziliang, Shenzhen, Guangdong 518129 (CN); DING, Tao, Shenzhen, Guangdong 518129 (CN); HUANG, Yemao, Shenzhen, Guangdong 518129 (CN)
(74) Representative: Henselmann, Alexander Gerhard
(86) International application number: PCT/CN2024/113441
(87) International publication number: WO 2025/148324

(57) **Abstract**

This application provides an intelligent driving method, an intelligent driving domain controller, and a sensor, and relates to the field of intelligent driving technologies, to reduce complexity of implementing a redundant backup solution of an intelligent driving function, avoid a complex problem caused by deploying two intelligent driving domain controllers, and reduce development costs. The method includes: An SoC in an intelligent driving domain controller receives first sensing data from M sensors, and the SoC sends first information to a target sensor based on the first sensing data when an MCU in the intelligent driving domain controller fails, to enable the target sensor to output a first vehicle control instruction to control the vehicle, where the target sensor is one of the M sensors.

## Description

This application claims priority to Chinese Patent Application No. 202410033960.1, filed with the China National Intellectual Property Administration on January 9, 2024 and entitled "INTELLIGENT DRIVING METHOD, INTELLIGENT DRIVING DOMAIN CONTROLLER, AND SENSOR", which is incorporated herein by reference in its entirety.

### TECHNICAL FIELD

This application relates to the field of intelligent driving technologies, and in particular, to an intelligent driving method, an intelligent driving domain controller, and a sensor.

### BACKGROUND

Automotive safety integrity levels (automotive safety integrity levels, ASILs) are derived from the international standard ISO 26262 (Road vehicles-Functional safety). The standard specifies functional safety requirements for automotive electronic and electrical systems (for example, motors, controllers, and software). Currently, five levels, namely, quality management (quality management, QM), A, B, C, and D are defined. The requirements for functional safety increase successively across these levels.

With development of intelligent driving technologies, to meet functional safety requirements, there arises a demand for redundant backup of vehicle components with ASIL B or higher. Take an intelligent driving domain controller on a vehicle as an example. Currently, deploying two intelligent driving domain controllers is a mainstream solution for redundant backup of an intelligent driving function. However, this solution is not easy to implement due to the following reasons, for example, each of the two intelligent driving domain controllers has to be deployed with a time synchronization scheme, a data plane switching scheme, and the like, which is often prone to various anomalies such as data plane disconnection and data loss; in addition, it is difficult to deploy and run intelligent driving services on the intelligent driving domain controllers, leading to high development difficulty and high costs.

### SUMMARY

This application provides an intelligent driving method, an intelligent driving domain controller, and a sensor, to reduce complexity of implementing a redundant backup solution of an intelligent driving function, avoid a complex problem caused by deploying two intelligent driving domain controllers, and reduce development costs.

To achieve the foregoing objectives, this application uses the following technical solutions.

According to a first aspect, an intelligent driving method is provided, applied to an intelligent driving domain controller of a vehicle. The intelligent driving domain controller includes a system-on-chip SoC and a microcontroller unit MCU, and the method includes: The SoC receives first sensing data from M sensors, where M is greater than or equal to 2, and the SoC sends first information to a target sensor based on the first sensing data when the MCU fails, to enable the target sensor to output a first vehicle control instruction to control the vehicle, where the target sensor is one of the M sensors.

Based on the foregoing technical solution, after the SoC receives the sensing data from the sensors, if the MCU fails, the SoC may send the first information obtained through sensing calculation to the target sensor, and the target sensor outputs the vehicle control instruction to implement control of the vehicle, for example, implement autonomous driving of the vehicle. In this way, redundant backup of an intelligent driving function can be implemented, and there is no need to deploy two intelligent driving domain controllers, so that a complex problem caused by deploying two intelligent driving domain controllers can be avoided, and development costs can be reduced.

In a possible design, the method further includes: The SoC sends the first information to the MCU based on the first sensing data when the MCU does not fail, to enable the MCU to output a second vehicle control instruction to control the vehicle. Based on this design, after the SoC receives the sensing data from the sensors, if the MCU does not fail, the SoC may send the first information obtained through sensing calculation to the MCU, and the MCU outputs the vehicle control instruction to implement control of the vehicle, for example, implement autonomous driving of the vehicle. In this way, redundant backup of an intelligent driving function can be implemented, and the complex problem caused by deploying two intelligent driving domain controllers can be avoided, so that the development costs can be reduced. In addition, the MCU instead of the target sensor is prioritized to output the vehicle control instruction. Because both the SoC and the MCU are located in the intelligent driving domain controller, a communication link is shorter than a communication link for transmitting the first information to the target sensor, and computational power of the MCU is better than that of the target sensor. In this way, signal transmission time can be reduced, and a computing speed can be increased, so that control efficiency and control precision of the vehicle can be improved.

In a possible design, the method further includes: The MCU receives second sensing data from N sensors, where N is less than M, and when the SoC fails, the MCU outputs a third vehicle control instruction based on the second sensing data to control the vehicle. Based on this design, after the MCU obtains the sensing data from the sensors, if the SoC fails, the MCU obtains the vehicle control instruction through calculation based on the sensing data, to implement control of the vehicle. In this way, redundant backup of an intelligent driving function can be implemented, and the complex problem caused by deploying two intelligent driving domain controllers can be avoided, so that the development costs can be reduced. In addition, computational power of the MCU is better than that of the target sensor. In this way, when the SoC fails, the MCU controls the vehicle, so that control efficiency and control precision of the vehicle can be improved.

In a possible design, the first information is a vehicle control instruction, or the first information is a sensing result obtained through calculation based on the first sensing data. Based on this design, the SoC directly performs calculation to obtain the vehicle control instruction, so that calculation efficiency of the vehicle control instruction can be improved. The SoC only performs calculation to obtain the sensing result, and the target sensor or the MCU performs further calculation to obtain the vehicle control instruction. Because a level of the MCU and the target sensor is generally ASIL D, and a level of the SoC is generally QM or ASIL B, security and reliability of the vehicle control instruction can be improved.

In a possible design, the method further includes: When the MCU fails for longer than a first preset duration, the SoC sends second information to the target sensor, to control the vehicle to stop or stop controlling the vehicle. Based on this design, when the MCU fails, duration for which the SoC controls the vehicle is the first preset duration. In other words, the SoC controls the vehicle only in a period of time. Because the MCU fails, that is, a vehicle fault occurs, safety of the vehicle is reduced. In this way, the vehicle is controlled to continue autonomous driving only in a period of time, so that driving safety can be ensured, driver experience can be improved, and more reaction time is provided for a driver to take over the vehicle.

In a possible design, the method further includes: When the SoC fails for longer than a second preset duration, the MCU controls the vehicle to stop or stops controlling the vehicle. Based on this design, when the SoC fails, duration for which the MCU controls the vehicle is the second preset duration. In other words, the MCU controls the vehicle only in a period of time. Because the SoC fails, that is, a vehicle fault occurs, safety of the vehicle is reduced. In this way, the vehicle is controlled to continue autonomous driving only in a period of time, so that driving safety can be ensured, driver experience can be improved, and more reaction time is provided for the driver to take over the vehicle.

In a possible design, the method further includes: The SoC determines whether the MCU fails by monitoring a heartbeat of the MCU, and/or, the MCU determines whether the SoC fails by monitoring a heartbeat of the SoC. Based on this design, the SoC can determine whether the MCU fails by monitoring the heartbeat of the MCU, to determine whether to send the first information to the target sensor to implement control of the vehicle by using the target sensor. The MCU can determine whether the SoC fails by monitoring the heartbeat of the SoC, to determine whether to control the vehicle based on received sensing data, to implement control of the vehicle.

In a possible design, the method further includes: The SoC receives indication information from the target sensor, where the indication information indicates whether the MCU fails, and/or, the MCU receives indication information from the target sensor, where the indication information indicates whether the SoC fails. Based on this design, both the SoC and the MCU can determine, by using the indication information from the target sensor, whether the other party fails. In other words, the target sensor monitors whether the SoC and the MCU fail and then notifies the SoC and the MCU, thereby saving power consumption of the SoC and the MCU for monitoring the heartbeat of the other party.

In a possible design, the M sensors include at least a forward radar and an intelligent front camera IFC, and the target sensor is the IFC. Based on this design, the target sensor is the IFC. Because the IFC includes a device such as a conventional camera module, and also includes a small compute unit, the IFC has a specific computing capability, and can implement a function such as obstacle detection. In this way, after receiving the sensing result of the SoC, the IFC may obtain the vehicle control instruction through calculation based on the computing capability of the IFC, to implement control of the vehicle. As a forward obstacle sensing module, the forward radar has a short-distance sensing capability for intelligent driving and can provide obstacle recognition information. In addition, the sensor and the IFC are sensors of different types, so that the sensing data can be enriched, and the vehicle control instruction can be more accurate.

According to a second aspect, an intelligent driving method is provided, applied to a target sensor on a vehicle. The vehicle further includes an intelligent driving domain controller, and the method includes: When both an SoC and an MCU of the intelligent driving domain controller fail, receiving sensing data from a first sensor; and outputting a vehicle control instruction based on sensing data of the target sensor and the sensing data of the first sensor to control the vehicle.

Based on the foregoing technical solution, when both the SoC and the MCU fail, the target sensor receives sensing data of a sensor connected thereto, and implements control of the vehicle based on the sensing data, for example, controls intelligent driving of the vehicle, thereby implementing redundant backup of an intelligent driving function. In addition, there is no need to deploy two intelligent driving domain controllers, so that a complex problem caused by deploying two intelligent driving domain controllers can be avoided, and development costs can be reduced.

In a possible design, the method further includes: receiving first information from the SoC when only the MCU fails; and outputting another vehicle control instruction based on the first information to control the vehicle. Based on this design, if only the MCU fails, the first information of the SoC may be received, and the vehicle control instruction is output based on the first information to implement control of the vehicle, for example, implement autonomous driving of the vehicle. In this way, when the SoC does not fail, the SoC is prioritized to perform various complex computations related to intelligent driving. Because computational power of the SoC is higher than that of the target sensor, control precision and control efficiency of the vehicle can be improved, and the sensing data of the target sensor can be saved.

In a possible design, after the outputting the vehicle control instruction based on the sensing data of the target sensor and the sensing data of the first sensor to control the vehicle, the method further includes: sending, via a controller area network CAN bus, the vehicle control instruction to an actuator corresponding to the vehicle control instruction. Based on this design, the target sensor may further establish a connection to the CAN bus. In this way, the target sensor can send the vehicle control instruction of the target sensor or the vehicle control instruction from the SoC to the actuator of the vehicle, to implement control of the vehicle.

In a possible design, the first information is the another vehicle control instruction, or the first information is a sensing result obtained through calculation based on sensing data of M sensors. M is greater than or equal to 2, and the M sensors include the target sensor and the first sensor.

In a possible design, before the outputting the vehicle control instruction based on the sensing data of the target sensor and the sensing data of the first sensor to control the vehicle, the method further includes: obtaining, via the CAN bus, a compensation signal, where the compensation signal is used to compensate for an error of the sensing data of the target sensor caused by movement of the vehicle. Based on this design, when both the MCU and the SoC fail, the target sensor may obtain the compensation signal via the CAN bus, to compensate for the error of the sensing data, so that the sensing data can be more accurate, and a more accurate vehicle control instruction can be obtained, thereby improving control precision of the vehicle.

In a possible design, the method further includes: when neither the SoC nor the MCU fails, receiving a first synchronization signal and a first compensation signal from the SoC, and receiving a second synchronization signal and a second compensation signal from the MCU; performing time synchronization based on the first synchronization signal, and compensating, based on the first compensation signal, for an error of the sensing data of the target sensor caused by movement of the vehicle; receiving the second synchronization signal and the second compensation signal from the MCU when the SoC fails; and performing time synchronization based on the second synchronization signal, and compensating, based on the second compensation signal, for the error of the sensing data of the target sensor caused by movement of the vehicle. Based on this design, when neither the SoC nor the MCU fails, the target sensor receives the synchronization signals and the compensation signals of the SoC and the MCU at the same time, prioritizes the signals of the SoC, and performs time synchronization and error compensation based on the signals of the SoC. When the SoC fails, time synchronization and error compensation are performed based on the signals of the MCU, so that control precision when the target sensor controls the vehicle can be improved.

In a possible design, the method further includes: when both the SoC and the MCU fail for longer than a preset duration, stopping controlling the vehicle or controlling the vehicle to stop based on the sensing data of the target sensor and the sensing data of the first sensor. Based on this design, when both the MCU and the SoC fail, duration for which the target sensor controls the vehicle is the preset duration. In other words, the target sensor controls the vehicle only in a period of time. Because both the MCU and the SoC fail, that is, a vehicle fault occurs, safety of the vehicle is reduced. In this way, the vehicle is controlled to continue autonomous driving only in a period of time, so that driving safety can be ensured, driver experience can be improved, and more reaction time is provided for a driver to take over the vehicle.

In a possible design, the target sensor is an IFC, and the first sensor is a forward radar. Based on the design, the target sensor is the forward radar. To be specific, when the IFC controls the vehicle, a forward sensor is selected to sense an obstacle. In comparison with a case that a sensor with a different orientation is selected, safety and precision of vehicle control can be improved. In addition, the forward radar and the IFC are sensors of different types, so that the sensing data can be enriched, and safety and precision of vehicle control can be improved.

According to a third aspect, an intelligent driving domain controller is provided, including an SoC and an MCU. The SoC is configured to: receive first sensing data from M sensors, where M is greater than or equal to 2; and send first information to a target sensor based on the first sensing data when the MCU fails, to enable the target sensor to output a first vehicle control instruction to control the vehicle, where the target sensor is one of the M sensors.

In a possible design, the SoC is further configured to: send the first information to the MCU based on the first sensing data when the MCU does not fail, to enable the MCU to output a second vehicle control instruction to control the vehicle.

In a possible design, the MCU is configured to: receive second sensing data from N sensors, where N is less than M; and when the SoC fails, output a third vehicle control instruction based on the second sensing data to control the vehicle.

In a possible design, the first information is a vehicle control instruction, or the first information is a sensing result obtained through calculation based on the first sensing data.

In a possible design, the SoC is further configured to: when the MCU fails for longer than a first preset duration, send second information to the target sensor, to control the vehicle to stop or stop controlling the vehicle.

In a possible design, the SoC is further configured to: when the SoC fails for longer than a second preset duration, control the vehicle to stop or stop controlling the vehicle.

In a possible design, the SoC is further configured to: determine whether the MCU fails by monitoring a heartbeat of the MCU; and/or, determine whether the SoC fails by monitoring a heartbeat of the SoC.

In a possible design, the SoC is further configured to: receive indication information from the target sensor, where the indication information indicates whether the MCU fails; and/or, the MCU is further configured to receive indication information from the target sensor, where the indication information indicates whether the SoC fails.

In a possible design, the M sensors include at least a forward radar and an intelligent front camera IFC, and the target sensor is the IFC.

According to a fourth aspect, a sensor is provided, where the sensor includes a communication unit (or referred to as a communication module) and a processing unit (or referred to as a processing module). The communication unit is configured to receive sensing data from a first sensor when both an SoC and an MCU of an intelligent driving domain controller fail. The processing unit is configured to output a vehicle control instruction based on sensing data of the target sensor and the sensing data of the first sensor, to control a vehicle.

In a possible design, the communication unit is further configured to receive first information from the SoC when only the MCU fails, and the processing unit is further configured to output another vehicle control instruction based on the first information to control the vehicle.

In a possible design, the communication unit is further configured to send, via a controller area network CAN bus, the vehicle control instruction to an actuator corresponding to the vehicle control instruction.

In a possible design, the first information is the another vehicle control instruction, or the first information is a sensing result obtained through calculation based on sensing data of M sensors. M is greater than or equal to 2, and the M sensors include the target sensor and the first sensor.

In a possible design, the communication unit is further configured to obtain, via the CAN bus, a compensation signal. The compensation signal is used to compensate for an error of the sensing data of the target sensor caused by movement of the vehicle.

In a possible design, the communication unit is further configured to: when neither the SoC nor the MCU fails, receive a first synchronization signal and a first compensation signal from the SoC, and receive a second synchronization signal and a second compensation signal from the MCU. The processing unit is further configured to perform time synchronization based on the first synchronization signal, and compensate, based on the first compensation signal, for an error of the sensing data of the target sensor caused by movement of the vehicle. The communication unit is further configured to receive the second synchronization signal and the second compensation signal from the MCU when the SoC fails. The processing unit is further configured to perform time synchronization based on the second synchronization signal, and compensate, based on the second compensation signal, for the error of the sensing data of the target sensor caused by movement of the vehicle.

In a possible design, the processing unit is further configured to: when both the SoC and the MCU fail for longer than a preset duration, stop controlling the vehicle or control the vehicle to stop based on the sensing data of the target sensor and the sensing data of the first sensor.

In a possible design, the target sensor is an IFC, and the first sensor is a forward radar.

According to a fifth aspect, a sensor is provided, including a processor. The processor is configured to execute a computer program or instructions, to enable the method according to the second aspect and any design of the second aspect to be performed.

In a possible design, the sensor may further include a memory, and the memory is configured to store a computer program or instructions. Optionally, the memory may be coupled to the processor, or may be independent of the processor.

In a possible design, the sensor may further include a communication interface, and the communication interface may be used for communication between the sensor and another apparatus (for example, an intelligent driving domain controller or a first sensor). For example, the communication interface may be a transceiver, an input/output interface, an interface circuit, an output circuit, an input circuit, a pin, or a related circuit.

According to a sixth aspect, an intelligent driving system is provided, including the intelligent driving domain controller according to the third aspect and any design of the third aspect, and the sensor according to any design of the fourth aspect or the fifth aspect.

According to a seventh aspect, a vehicle is provided, including the intelligent driving domain controller according to the third aspect and any design of the third aspect, and the sensor according to any design of the fourth aspect or the fifth aspect.

According to an eighth aspect, a computer-readable storage medium is provided. The computer-readable storage medium includes a computer program. When the computer program is run on an intelligent driving domain controller, the intelligent driving domain controller is enabled to perform the method according to the first aspect and any design of the first aspect. When the computer program is run on a sensor, the sensor is enabled to perform the method according to the second aspect and any design of the second aspect.

According to a ninth aspect, a computer program product is provided. The computer program product includes a computer program or instructions. When the computer program or the instructions are run on a computer, the computer is enabled to perform the method according to the first aspect or the second aspect and any design of the first aspect or the second aspect.

According to a tenth aspect, a chip system is provided, including at least one processor and at least one interface circuit. The at least one interface circuit is configured to: perform a transceiver function, and send instructions to the at least one processor, and when the at least one processor executes the instructions, the at least one processor performs the method according to any design of the first aspect or the second aspect.

It should be noted that, for technical effects brought by any design of the third aspect to the tenth aspect, refer to technical effects brought by a corresponding design of the first aspect. Details are not described herein again.

### BRIEF DESCRIPTION OF DRAWINGS

FIG. 1 is a diagram of a structure of a vehicle according to an embodiment of this application;
FIG. 2 is a diagram of a deployment architecture of an intelligent driving domain controller according to an embodiment of this application;
FIG. 3 is a diagram of an architecture of a communication system according to an embodiment of this application;
FIG. 4 is a diagram of a structure of a sensor according to an embodiment of this application;
FIG. 5A and FIG. 5B are schematic flowcharts of an intelligent driving method according to an embodiment of this application;
FIG. 6 is a schematic flowchart of another intelligent driving method according to an embodiment of this application;
FIG. 7 is a schematic flowchart of another intelligent driving method according to an embodiment of this application; and
FIG. 8 is a diagram of a structure of another sensor according to an embodiment of this application.

### DESCRIPTION OF EMBODIMENTS

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

To clearly describe the technical solutions in embodiments of this application, words such as "first" and "second" are used in embodiments of this application to distinguish between same items or similar items with basically same functions and effects. A person skilled in the art can understand that the words such as "first" and "second" do not limit a quantity or an execution sequence, and the words such as "first" and "second" do not define a definite difference.

Currently, an entire vehicle may be divided into several domains (also referred to as "functional domains") based on functions of components of the vehicle. For example, in some implementations, the entire vehicle may be divided into an intelligent driving domain, a cockpit domain, a chassis domain, a power domain, a vehicle body domain, and the like. It may be understood that domains divided based on concepts of different vendors may vary. In addition, a plurality of domains may also be converged across domains to obtain a converged domain. Controllers of the domains may use stronger processing capabilities to centrally control corresponding domains, thereby implementing integration of vehicle-mounted computing required for a plurality of functions. An intelligent driving domain controller (for example, a mobile data center (mobile data center, MDC) provided by Huawei) is a "brain" that implements functions such as intelligent driving sensing, map and sensor fusion positioning, path planning, and decision control.

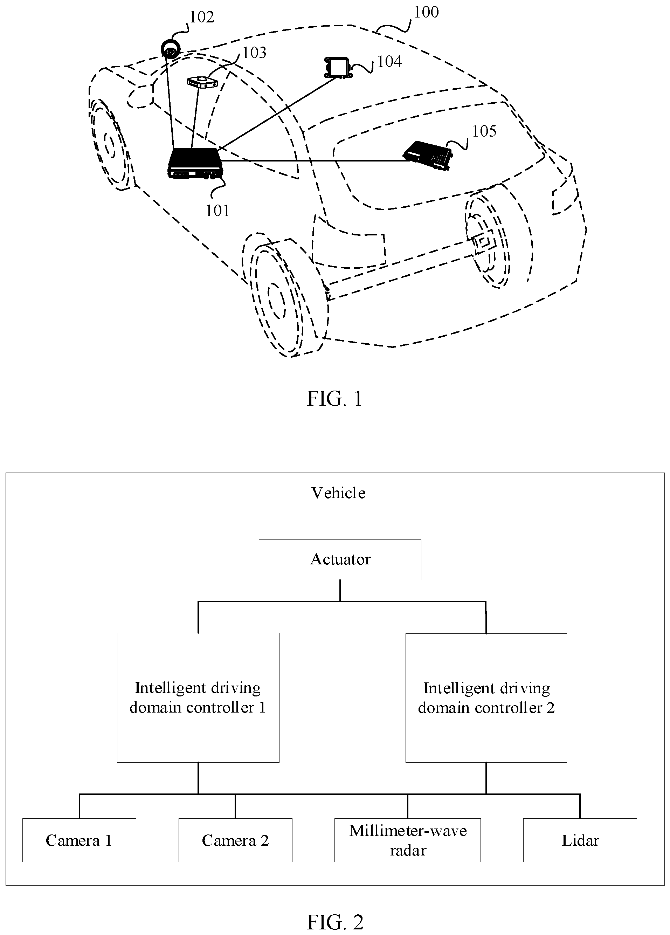

As shown in FIG. 1, an intelligent driving domain controller 101 may be mounted on a vehicle 100, and is responsible for functions related to autonomous driving, such as sensing, decision-making, and control. In some scenarios, the intelligent driving domain controller 101 may support a plurality of interface protocols, to implement communication with another device on the vehicle 100. For example, the intelligent driving domain controller 101 communicates with various sensors (for example, a camera 102, a lidar 103, and a millimeter-wave radar 104) mounted on the vehicle 100 to obtain information sensed by the various sensors. The intelligent driving domain controller 101 fuses the information sensed by the various sensors, makes a driving decision/planning based on the fused information, and delivers an operation command (or referred to as a vehicle control instruction or the like) to a vehicle controller unit (vehicle controller unit, VCU) 105 based on the driving decision/planning. The intelligent driving domain controller 101 controls an actuator of the vehicle 100 by using the VCU 105 to perform a corresponding action, such as acceleration/deceleration, lane changing, steering, braking, or warning. Alternatively, the intelligent driving domain controller 101 directly delivers an operation command to the actuator of the vehicle 100, to control the actuator to perform a corresponding action.

In some implementations, the intelligent driving domain controller includes a compute unit and a control unit. The compute unit is implemented in a form of a system-on-chip (System-On-Chip, SoC), and the control unit is implemented in a form of a microcontroller unit (microcontroller unit, MCU). The SoC is configured to implement operations such as logic processing, image processing, artificial intelligence (artificial intelligence, AI) processing, and storage processing, which are respectively implemented by using a central processing unit (central processing unit, CPU), a graphics processing unit, an AI processor, and a memory. A level of the SoC is generally QM or ASIL B, and a level of the MCU is generally ASIL D.

Currently, to meet requirements for functional safety in intelligent driving regulations, there arises a demand for redundant backup of the intelligent driving domain controller. For example, two intelligent driving domain controllers are deployed to implement redundant backup of an intelligent driving function. For example, FIG. 2 is a diagram of a deployment architecture of an intelligent driving domain controller. As shown in FIG. 2, both an intelligent driving domain controller 1 and an intelligent driving domain controller 2 are deployed on a vehicle. Each of the intelligent driving domain controller 1 and the intelligent driving domain controller 2 is connected to sensors (for example, including but is not limited to a camera 1, a camera 2, a lidar, and a millimeter-wave radar), an actuator (for example, a chassis), and the like on the vehicle. When the intelligent driving domain controller 1 does not fail (or is referred to as faulty, or having a functional anomaly, or the like), the intelligent driving domain controller 1 may receive sensing data from the sensor, and send a vehicle control instruction to the actuator based on the sensing data. Correspondingly, after receiving the vehicle control instruction from the intelligent driving domain controller 1, the actuator executes the vehicle control instruction, to implement vehicle acceleration, deceleration, lane changing, steering, braking, warning, or the like.

When the intelligent driving domain controller 1 fails, the intelligent driving domain controller 2 may receive the sensing data from the sensor, and send a vehicle control instruction to the actuator based on the sensing data. Correspondingly, after receiving the vehicle control instruction from the intelligent driving domain controller 2, the actuator may also execute the vehicle control instruction, to implement vehicle acceleration, deceleration, lane changing, steering, braking, warning, or the like.

However, the foregoing redundant backup solution is not easy to implement due to the following reasons, for example, each of the two intelligent driving domain controllers has to be deployed with a time synchronization scheme, a data plane switching scheme, and the like, which is often prone to various anomalies such as data plane disconnection and data loss; in addition, it is necessary to switch an intelligent driving service deployed at an upper layer between different intelligent driving domain controllers, leading to high development difficulty and high costs.

In some scenarios, the sensors on the vehicle have different clock crystal oscillators, data transmission paths, and the like. In addition, there is a delay from collecting data and processing the data to sending the data to the intelligent driving domain controller by the sensors, and duration of the delay is unstable. Therefore, to improve performance of autonomous driving, such as sensor fusion, decision-making planning, and fusion positioning, time synchronization needs to be performed on the intelligent driving domain controller, the sensors, and the like.

Based on this, an embodiment of this application provides an intelligent driving method. When an SoC in an intelligent driving domain controller fails but an MCU in the intelligent driving domain controller does not fail, the MCU may control a vehicle. When both the SoC and the MCU in the intelligent driving domain controller fail, a sensor or a terminal side device may control the vehicle. The method can reduce complexity of implementing a redundant backup solution of an intelligent driving function, avoid a complex problem caused by deploying two intelligent driving domain controllers, and reduce development costs.

The intelligent driving domain controller in this embodiment of this application may be a domain controller configured to implement functions such as sensing, positioning, path planning, and decision control on various devices, for example, including but is not limited to an intelligent driving domain controller on a carrier (for example, a vehicle), and a domain controller on a terminal device. For example, the carrier may include but is not limited to a ground-based carrier such as a vehicle, a bus, a motorcycle, a locomotive, and a subway; a water-based carrier such as a ship and a submarine; and an air-based carrier such as an aircraft and a helicopter. The terminal device may include but is not limited to an artificial intelligence (artificial intelligence, AI) device, and the like.

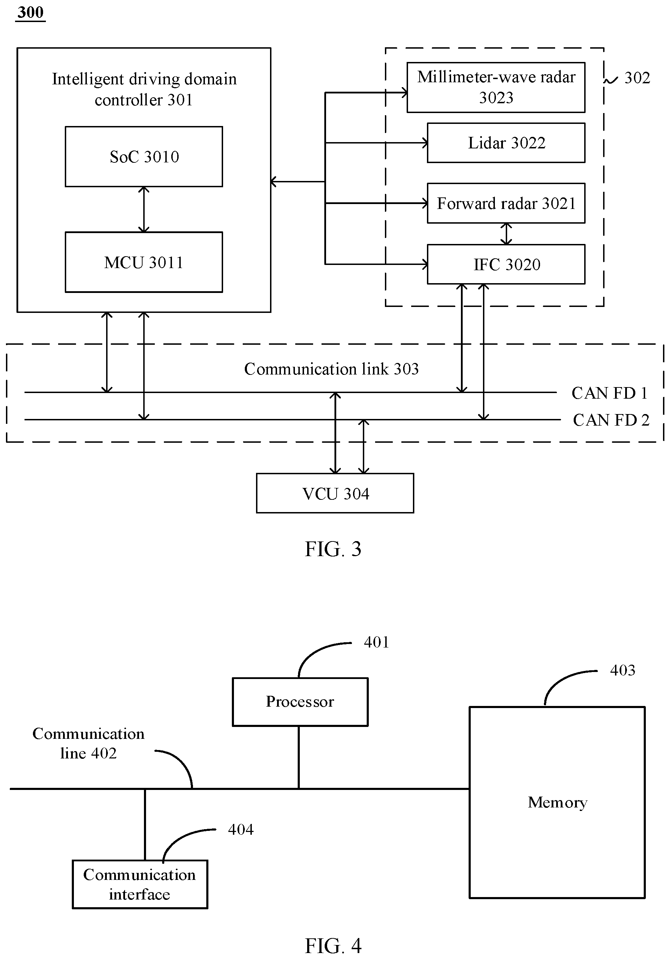

For example, FIG. 3 is a diagram of an architecture of a communication system to which an intelligent driving method is applied according to an embodiment of this application. Optionally, a communication system 300 may be mounted on the foregoing carrier, or may be mounted on the terminal device. In this embodiment of this application, an example in which the communication system 300 is mounted on a vehicle is used to describe an architecture of the communication system 300. Optionally, the vehicle may be a conventional vehicle or an autonomous driving vehicle used for carrying. The autonomous vehicle may also be referred to as an unmanned vehicle, an intelligent driving vehicle, or the like. The autonomous vehicle may drive in a manual mode, a fully autonomous mode, or a partially autonomous mode. When being configured to drive in the fully autonomous mode or the partially autonomous mode, the autonomous vehicle may drive autonomously in a geographic area with little or no control input from a driver.

As shown in FIG. 3, the communication system 300 includes an intelligent driving domain controller 301 and one or more sensors 302.

The intelligent driving domain controller 301 may be configured to manage a plurality of electronic control units (electronic control unit, ECU) included in the intelligent driving domain, to implement functions related to autonomous driving, such as sensing, decision-making, and control. Different ECUs can implement different functions. For example, an engine ECU can control an air intake volume, a fuel injection volume, and ignition time of an engine, and an air conditioner ECU can control a temperature in a vehicle.

The intelligent driving domain controller 301 includes an SoC 3010 and an MCU 3011. The SoC 3010 may be configured to perform complex calculation for various algorithms related to intelligent driving, for example, including but is not limited to sensing, fusion, positioning, and planning control. In some implementations, the SoC 3010 may be a circuit having a capability of reading and executing instructions, for example, a CPU, a micro processing unit (micro processor unit, MPU), a graphics processing unit (graphics processing unit, GPU), a digital signal processor (digital signal processing, DSP), an analog to digital converter (analog to digital converter, ADC), a digital to analog converter (digital to analog converter, DAC), or a modem processor. In another implementation, the SoC 3010 may implement a specific function by using a logical relationship of a hardware circuit, and the logical relationship of the hardware circuit may be fixed or reconfigurable.

The MCU 3011 is mainly configured to connect to various communication links for transmitting vehicle control instructions, for example, a communication link 303. The MCU 3011 may send a vehicle control instruction to the communication link 303, to implement control of the vehicle. For example, as shown in FIG. 3, the communication link 303 may be specifically implemented as a controller area network flexible data-rate (controller area network flexible data-rate, CAN FD) bus, for example, CAN FD 1 and CAN FD 2. Certainly, in another implementation, the communication link may alternatively be implemented as a communication link generated in another communication manner, for example, Ethernet.

In some embodiments, a power supply (for example, a complex programmable logic device (complex programmable logic device, CPLD)) of the SoC 3010 may be controlled by the MCU 3011, and the MCU 3011 may be responsible for detecting an operating status of the SoC 3010 and performing various operations such as power-on and power-off of the SoC 3010. Certainly, in another embodiment, the power supply of the SoC 3010 may alternatively be directly controlled by the SoC 3010. This is not limited in this embodiment of this application.

For example, the one or more sensors 302 may include but are not limited to one or more types of a camera (for example, an intelligent front camera (intelligent front camera, IFC) 3020), a radar (for example, a forward radar 3021, a lidar 3022, a millimeter-wave radar 3023, or an ultrasonic radar), an inertia measurement unit (inertial measurement unit, IMU), a global positioning system (global positioning system, GPS), and the like.

Optionally, in the one or more sensors 302, a part of sensors are connected to the SoC 3010, and the other part of sensors are connected to a connection to the MCU 3011. Optionally, for a same sensor, the sensor maybe connected to only one of the SoC 3010 and the MCU 3011, or may be connected to a connection to both the SoC 3010 and the MCU 3011. In some embodiments, a quantity of sensors connected to the SoC 3010 is greater than a quantity of sensors connected to the MCU 3011, so that the SoC 3010 can perform various calculation operations. Certainly, in another embodiment, the quantity of sensors connected to the SoC 3010 may alternatively be less than or equal to the quantity of sensors connected to the MCU 3011. This is not limited in this embodiment of this application.

In some embodiments, the one or more sensors may include a target sensor. The target sensor may be any sensor having a compute function, for example, including but is not limited to a camera (for example, an IFC 3020) and a radar with high computational power. Optionally, there may be one or more target sensors. It may be understood that, FIG. 3 shows an example in which the target sensor is the IFC 3020. The IFC 3020 includes a device such as a conventional camera module, and also includes a small compute unit. The IFC 3020 has a specific computational capability, and can implement a function such as obstacle detection. In this way, the IFC has a specific computational capability. When both the SoC and the MCU fail, a vehicle control instruction may be obtained through calculation by using the computational capability of the IFC. In addition, the IFC is connected to a communication link for transmitting a vehicle control instruction. In this way, the IFC can send a vehicle control instruction of the IFC and a vehicle control instruction from the SoC to the communication link for transmitting the vehicle control instruction. Further, the vehicle control instruction may be sent to the actuator to implement control of the vehicle. In addition, the IFC may further implement data exchange with the MCU through the communication link for transmitting the vehicle control instruction, to send sensing data to the MCU.

In some embodiments of this application, the target sensor may alternatively be connected to various communication links for transmitting vehicle control instructions, for example, the communication link 303. Similarly, the target sensor may alternatively send a vehicle control instruction to the communication link 303, to implement control of the vehicle.

In some other embodiments of this application, the one or more sensors 302 may further include a first sensor, and the target sensor may be further connected to the first sensor, to receive sensing data of the first sensor through the established connection. Optionally, the first sensor may be any one of the one or more sensors 302 other than the target sensor. The first sensor and the target sensor may be sensors of a same type or different types. Optionally, there may also be one or more first sensors. In FIG. 3, an example in which the first sensor is a forward radar 3021 is used. The forward radar 3021 is a forward obstacle sensor with a short-distance sensing capability for intelligent driving, and may be used as a sensing module to provide obstacle recognition information. In this way, the first sensor is connected to the target sensor. Subsequently, when the target sensor controls the vehicle, the target sensor may receive the sensing data of the first sensor through the established connection, and then generate a vehicle control instruction based on the sensing data of the first sensor to implement control of the vehicle.

Optionally, the SoC 3010, the MCU 3011, the sensors, the target sensor, and the first sensor described above may be connected to each other via an in-vehicle bus. The bus may be a controller local area network (controller area network, CAN) bus, or may be a wired communication line such as Ethernet, a local interconnect network (local interconnect network, LIN) bus, a media oriented system transport (media oriented system transport, MOST) bus, or FlexRay, or may be a line generated by a wireless communication module such as wireless fidelity (wireless fidelity, Wi-Fi), Bluetooth, or ZigBee (ZigBee).

In some embodiments, the communication system 300 may further include one or more other domain controllers and/or one or more other ECUs (for example, including but are not limited to air suspension, a chassis, and a mobile phone key), for example, a VCU 304 shown in FIG. 3. The one or more domain controllers and/or the one or more ECUs may also be connected to the communication link 303 to implement information delivery. For example, the VCU 304 may be connected to the communication link 303, receive a vehicle control instruction from the communication link 303, and send the vehicle control instruction to the actuator (for example, a chassis) for execution, thereby implementing control of the vehicle, for example, including but is not limited to acceleration/deceleration, lane changing, steering, braking, or warning. In another embodiment, the actuator may alternatively be directly connected to the communication link 303, receive a vehicle control instruction from the communication link 303, and execute the vehicle control instruction, to implement control of the vehicle.

It may be understood that the communication architecture shown in FIG. 3 is merely an example for description. In another embodiment, the communication system shown in FIG. 3 may further include another apparatus, which is not shown in the figure.

For example, FIG. 4 is a diagram of a structure of a target sensor according to an embodiment of this application. The target sensor includes at least one processor 401, a communication line 402, a memory 403, and at least one communication interface 404.

The processor 401 may be an MCU, a general-purpose CPU, a microprocessor, an ASIC, or one or more integrated circuits configured to control program execution in the solutions in this application.

The communication line 402 may include a path for transmitting information between the foregoing components.

The communication interface 404 is configured to communicate with another apparatus (for example, the SoC 3010 and the MCU 3011 shown in FIG. 3). In this embodiment of this application, the communication interface 404 may be a module, a circuit, a bus, an interface, a transceiver, or another apparatus that can implement a communication function.

The memory 403 may be a read-only memory (read-only memory, ROM), a random access memory (random access memory, RAM), or any other medium that can be used to carry or store desired program code in a form of instructions or data structures and that can be accessed by a computer. The memory 403 may exist independently, and is connected to the processor 401 through the communication line 402. Alternatively, the memory 403 may be integrated with the processor 401.

The memory 403 is configured to store computer-executable instructions used to implement the solutions of this application. The processor 401 is configured to execute the computer-executable instructions stored in the memory 403, to implement methods provided in the following embodiments of this application.

In some other embodiments of this application, the target sensor may include more or fewer components than those shown in FIG. 4, or combine some components, or split some components, or replace some components, or have different component arrangements. The components shown in the figure may be implemented by hardware, software, or a combination of software and hardware. For example, if the target sensor is a camera, the structure shown in FIG. 4 may further include a lens, an image sensor, and the like. For another example, if the target sensor is a radar with high computational power, the structure shown in FIG. 4 may further include a transmitter, an antenna, and the like.

With reference to the communication system shown in FIG. 3, the following describes an intelligent driving method provided in embodiments of this application.

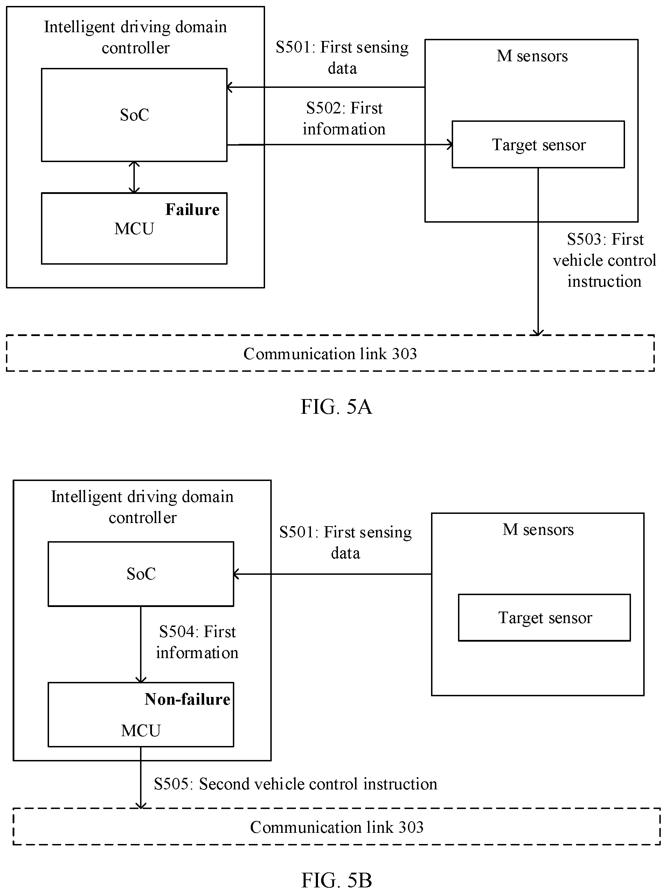

In some embodiments, as shown in FIG. 5A and FIG. 5B, the intelligent driving method may include the following steps.

S501: An SoC receives first sensing data from M sensors.

M is greater than or equal to 2, and M is an integer. Optionally, the M sensors may be a part or all of sensors connected to the SoC and sensors connected to the MCU. In some embodiments, the M sensors may include a forward radar and an IFC.

Optionally, whether the SoC fails or not, the SoC can continuously receive the first sensing data from the M sensors. It may be understood that in this embodiment of this application, a failure may also be referred to as an anomaly, a fault, or the like. When a device fails, the device cannot perform various operations that originally need to be performed.

In some embodiments, in a scenario in which the MCU fails, as shown in FIG. 5A, the intelligent driving method may further include step S502 and step S503.

S502: The SoC sends first information to a target sensor based on the first sensing data. Correspondingly, the target sensor receives the first information from the SoC.

The target sensor may be one of the M sensors. For example, the target sensor may be an IFC. Optionally, there may be one or more target sensors. When there are a plurality of target sensors, the SoC may choose to send the first information to any one of the target sensors. This is not limited in this embodiment of this application.

In some embodiments, the first information may be a sensing result obtained through calculation based on the first sensing data. In some other embodiments, the first information may be a vehicle control instruction.

It may be understood that, in this scenario, the target sensor is in a non-failure state.

S503: The target sensor outputs a first vehicle control instruction based on the first information.

The first vehicle control instruction may be used to control a vehicle. It may be understood that terms such as "first" and "second" are used to distinguish vehicle control instructions described in embodiments of this application. These terms are merely used to describe different sources of the vehicle control instructions, and do not constitute a limitation on content of the vehicle control instructions. The content included in different vehicle control instructions may be the same or different.

In some embodiments, the target sensor may send the output first vehicle control instruction to the communication link 303 shown in FIG. 3, and send the first vehicle control instruction to the VCU 304 via the communication link 303 (for example, a CAN bus), or send the first vehicle control instruction to an actuator corresponding to the first vehicle control instruction, to implement control of the vehicle.

Optionally, in the foregoing scenario, in some embodiments, when the MCU fails for longer than first preset duration, the SoC may further send second information to the target sensor, to control the vehicle to stop or stop controlling the vehicle. Correspondingly, the target sensor may also output, based on the second information, a corresponding vehicle control instruction to control the vehicle to stop or stop controlling the vehicle (that is, exit control on the vehicle, so that the vehicle enters a manual driving mode).

In some embodiments, preset duration described in this application may be determined based on computational power of the SoC, the MCU, and the target sensor. For example, when the computational power of the SoC is the highest and the computational power of the target sensor is the lowest, the first preset duration (for example, 20 seconds) may be greater than second preset duration (for example, 15 seconds), and the second preset duration may be greater than third preset duration (for example, 10 seconds). In this way, when a device with higher computational power controls the vehicle, longer control time is set; and when a device with lower computational power controls the vehicle, shorter control time is set. This ensures safety of intelligent driving and provides a driver with some reaction time to take over safely. Certainly, in another embodiment, the preset duration may alternatively be set in another manner, and the preset duration may be the same or different. This is not limited in this embodiment of this application.

Optionally, in the scenario in which the MCU fails, an autonomous driving level of the vehicle may drop by two levels, for example, from L5 to L3. This is not limited in this embodiment of this application.

Based on the foregoing technical solution, after obtaining the sensing data of the sensor, the SoC obtains the sensing result or the vehicle control instruction through calculation based on the sensing data. In the scenario in which the MCU fails, the target sensor may output the vehicle control instruction to implement control of the vehicle, for example, implement autonomous driving of the vehicle. In this way, redundant backup of an intelligent driving function can be implemented, and a complex problem caused by deploying two intelligent driving domain controllers can be avoided, so that development costs can be reduced.

It may be understood that without conflict, the intelligent driving methods described in embodiments of this application may be used in combination.

In some other embodiments, in a scenario in which the MCU does not fail, as shown in FIG. 5B, the intelligent driving method may further include step S504 and step S505.

S504: The SoC sends the first information to an MCU based on the first sensing data. Correspondingly, the MCU receives the first information from the SoC.

Optionally, in this scenario, the target sensor may be in a failure state, or may not be in a failure state. In this way, the SoC sends the first information to the MCU preferentially, to implement control of the vehicle. Because both the SoC and the MCU are located in an intelligent driving domain controller, a communication link is shorter than a communication link for transmitting the first information to the target sensor, and the computational power of the MCU is better than that of the target sensor. In this way, signal transmission time can be reduced, and a computing speed can be increased, so that control efficiency and control precision of the vehicle can be improved.

Certainly, in another embodiment, when neither the MCU nor the target sensor fails, the SoC may send the first information to the target sensor preferentially. This is not limited in this embodiment of this application.

S505: The MCU outputs a second vehicle control instruction based on the first information.

The second vehicle control instruction is used to control the vehicle. In some embodiments, the MCU may alternatively send the output second vehicle control instruction to the communication link 303 shown in FIG. 3, and send, via the communication link 303, the second vehicle control instruction to the VCU 304 or an actuator corresponding to the second vehicle control instruction, to implement control of the vehicle.

Optionally, in this scenario, when neither the SoC nor the MCU fails, the SoC may further send a first synchronization signal and a first compensation signal to the target sensor, and the MCU may further send a second synchronization signal and a second compensation signal to the target sensor. Correspondingly, the target sensor may receive the first synchronization signal, the first compensation signal, the second synchronization signal, the second compensation signal, and the like. The target sensor may perform time synchronization based on the first synchronization signal, and compensate, based on the first compensation signal, for an error of sensing data of the target sensor caused by movement of the vehicle. Optionally, the target sensor may further compensate, based on the first compensation signal, for an error of sensing data of another sensor caused by movement of the vehicle.

Certainly, the SoC may further send the first synchronization signal and the first compensation signal to another sensor (for example, a radar) other than the target sensor, and the MCU may also send the second synchronization signal and the second compensation signal to another sensor other than the target sensor. Correspondingly, the another sensor may also receive the first synchronization signal, the first compensation signal, the second synchronization signal, the second compensation signal, and the like. The another sensor may perform time synchronization based on the first synchronization signal, and compensate, based on the first compensation signal, for an error of sensing data of the another sensor caused by movement of the vehicle.

Optionally, in another implementation, the SoC may further send a status of the SoC to the sensor. Similarly, the MCU may also send a status of the MCU to the sensor.

It may be understood that, in the foregoing implementation, the synchronization signal and the compensation signal sent by the SoC are used as an example by default. In another embodiment, the synchronization signal and the compensation signal sent by the MCU may also be used as an example by default. This is not limited in this embodiment of this application.

It can also be understood that terms such as "first" and "second" are used or not to distinguish the synchronization signals and the compensation signals described in embodiments of this application. These terms are merely used to describe different sources of the synchronization signals and the compensation signals, and do not constitute a limitation on content of the synchronization signals and the compensation signals. Content included in the synchronization signals and the compensation signals may be the same or different. For example, each compensation signal may include information such as a vehicle pose and a speed.

Optionally, in this embodiment of this application, whether the MCU and/or the target sensor fails may be determined by the SoC. For example, the SoC may monitor a heartbeat of the MCU to determine whether the MCU fails. In this way, when power supply of the SoC is controlled by the MCU, if the SoC detects that the MCU fails, a power source (for example, a CPLD) may be indicated in time to continue supplying power to the SoC, thereby ensuring normal operation of the SoC. Similarly, the SoC may also monitor a heartbeat of the target sensor, to determine whether the target sensor fails. Certainly, whether the MCU and/or the target sensor fails may also be notified to the SoC by another device. For example, the target sensor may monitor the heartbeat of the MCU, and when determining that the MCU fails, the target sensor sends, to the SoC, indication information indicating that the MCU fails. The MCU may monitor the heartbeat of the target sensor. When determining that the target sensor fails, the MCU sends, to the SoC, the indication information indicating that the target sensor fails. In this way, the target sensor can switch the sources in time from which the target sensor receives the synchronization signal and the compensation signal, thereby ensuring accuracy of the sensing data of the target sensor. Certainly, the another device may alternatively be a device other than the target sensor and the MCU. This is not limited in this embodiment of this application.

Similarly, in this embodiment of this application, whether the SoC fails and/or the target sensor fails may alternatively be determined by the MCU through heartbeat monitoring and the like, or may be determined by receiving indication information from another device and the like. Whether the SoC fails and/or the target sensor fails may be determined by all target sensors through heartbeat monitoring and the like, or may be determined by receiving indication information from another device and the like.

Optionally, in the foregoing scenario in which the MCU does not fail, because the computational power of the MCU is better than the computational power of the target sensor, the autonomous driving level of the vehicle may drop by one level, for example, from L5 to L4. Certainly, in another implementation, the autonomous driving level of the vehicle may alternatively be set to another value. This is not limited in this embodiment of this application.

Based on the foregoing technical solution, after obtaining the sensing data of the sensor, the SoC obtains the sensing result or the vehicle control instruction through calculation based on the sensing data. In the scenario in which the MCU does not fail, the MCU is prioritized to output the vehicle control instruction to implement control of the vehicle, for example, implement autonomous driving of the vehicle. In this way, redundant backup of an intelligent driving function can be implemented, and the complex problem caused by deploying two intelligent driving domain controllers can be avoided, so that the development costs can be reduced. In addition, the MCU instead of the target sensor is prioritized to output the vehicle control instruction. Because both the SoC and the MCU are located in the intelligent driving domain controller, a communication link is shorter than a communication link for transmitting the first information to the target sensor, and computational power of the MCU is better than that of the target sensor. In this way, signal transmission time can be reduced, and a computing speed can be increased, so that control efficiency and control precision of the vehicle can be improved.

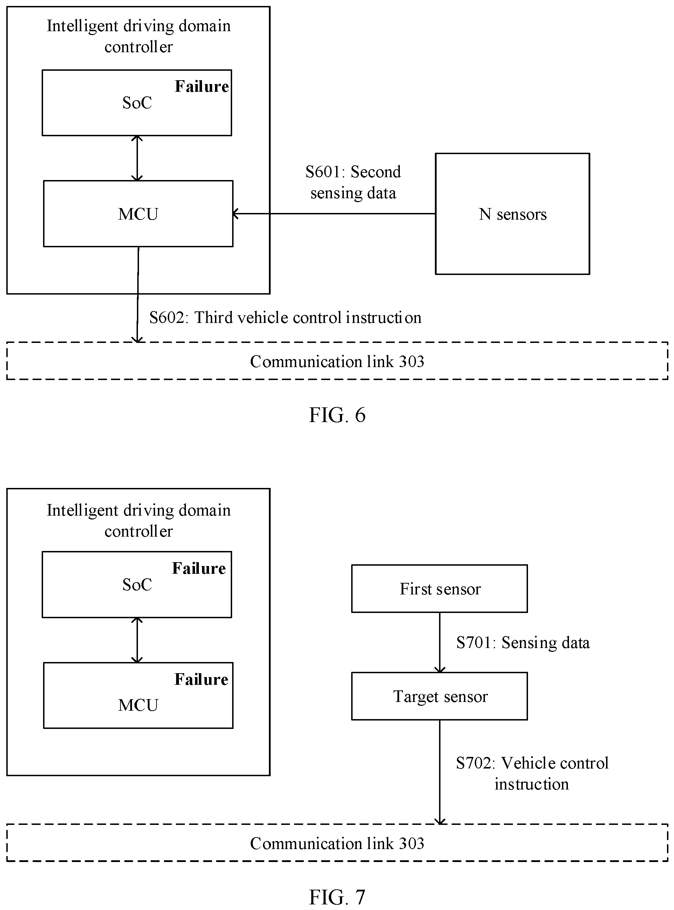

In some other embodiments, as shown in FIG. 6, the intelligent driving method may include the following steps.

S601: An MCU receives second sensing data from N sensors.

N is less than M, and N is a positive integer. Optionally, the N sensors may be some or all of sensors connected to the MCU. Optionally, the N sensors and the M sensors may partially overlap or may not overlap at all.

Optionally, whether the MCU fails or not, the MCU can continuously receive the second sensing data from the N sensors.

S602: When the SoC fails, the MCU outputs a third vehicle control instruction based on the second sensing data.

The third vehicle control instruction may be used to control a vehicle. Similarly, the MCU may also send the output third vehicle control instruction to the communication link 303 shown in FIG. 3, and send the third vehicle control instruction to the VCU 304 via the communication link 303, or send the third vehicle control instruction to an actuator corresponding to the third vehicle control instruction, to implement control of the vehicle.

Optionally, in some embodiments, when an SoC fails for longer than a second preset duration, the MCU may further control the vehicle to stop or stop controlling the vehicle. Optionally, when controlling the vehicle to stop, the MCU may further perform the operation based on the second sensing data.

Optionally, in this scenario, when the SoC fails, the MCU may further send a second synchronization signal and a second compensation signal to a target sensor. Correspondingly, the target sensor may receive the second synchronization signal and the second compensation signal, perform time synchronization based on the second synchronization signal, and compensate, based on the second compensation signal, for an error of sensing data of the target sensor caused by movement of the vehicle. Optionally, the target sensor may further compensate, based on the second compensation signal, for an error of sensing data of another sensor caused by movement of the vehicle.

Similarly, in this scenario, the MCU may further send the second synchronization signal and the second compensation signal to another sensor other than the target sensor. Correspondingly, the another sensor may also receive the second synchronization signal, the second compensation signal, and the like. The another sensor may perform time synchronization based on the second synchronization signal, and compensate, based on the second compensation signal, for an error of sensing data of the another sensor caused by movement of the vehicle.

Based on the foregoing technical solution, after the MCU obtains the sensing data from the sensors, if the SoC fails, the MCU may obtain the vehicle control instruction through calculation based on the sensing data, to implement control of the vehicle. In this way, redundant backup of an intelligent driving function can be implemented, and a complex problem caused by deploying two intelligent driving domain controllers can be avoided, so that development costs can be reduced.

In some embodiments, when the SoC does not fail, the MCU may further send the second sensing data to the SoC, so that the SoC can output first information by using the second sensing data. In this way, when the SoC does not fail, the MCU sends received sensing data to the SoC, and the SoC performs calculation of the sensing data. Because computational power of the SoC is higher than that of the MCU, a vehicle control instruction can be obtained more efficiently and accurately, thereby improving control efficiency and control precision of the vehicle.

It may be understood that, a case in which the MCU controls the vehicle when the SoC fails is used as an example in the foregoing embodiment. In another embodiment, when the SoC fails, the target sensor may also control the vehicle. For example, the target sensor may receive sensing data from a first sensor, and output a vehicle control instruction based on the sensing data to control the vehicle.

In still some other embodiments, as shown in FIG. 7, the intelligent driving method may include the following steps.

S701: When both an SoC and an MCU fail, a target sensor receives sensing data from a first sensor.

For example, the target sensor may receive the sensing data from the first sensor based on connection between the target sensor and the first sensor. For example, the first sensor may be a forward radar. Optionally, there may be one or more first sensors, and the target sensor may receive sensing data from some or all of the first sensors.

It may be understood that, a case in which the target sensor controls a vehicle based on sensing data of the target sensor and the sensing data of the first sensor (namely, sensing data of a sensor other than the target sensor) is used as an example in the embodiment shown in FIG. 7, so that control precision of the vehicle can be improved. Certainly, in another embodiment, the target sensor may alternatively control the vehicle based on only the sensing data of the target sensor. This is not limited in this embodiment of this application.

S702: The target sensor outputs a vehicle control instruction based on sensing data of the target sensor and the sensing data of the first sensor.

The vehicle control instruction is used to control the vehicle. In some embodiments, after step S702, the target sensor may send the output vehicle control instruction to the communication link 303 shown in FIG. 3, and send the vehicle control instruction to the VCU 304 via the communication link, or send the vehicle control instruction to an actuator corresponding to the vehicle control instruction, to implement control of the vehicle.

Optionally, in some embodiments, the target sensor may further obtain a compensation signal based on the communication link 303 (for example, a CAN bus) shown in FIG. 3, and compensate, based on the compensation signal, for an error of the sensing data of the target sensor caused by movement of the vehicle. In this way, a calculation result of the target sensor can be more accurate, thereby improving control precision of the vehicle. Optionally, the target sensor may further compensate, based on the compensation signal, for an error of the sensing data of the first sensor caused by movement of the vehicle. Certainly, the target sensor may also send the compensation signal to the first sensor, so that the first sensor compensates for the error of the sensing data of the first sensor caused by the movement of the vehicle.

In some embodiments, when both the SoC and the MCU fail for longer than a preset duration (for example, a third preset duration), the target sensor may stop controlling the vehicle or control the vehicle to stop. Optionally, when controlling the vehicle to stop, the target sensor may control, based on at least one of the sensing data of the target sensor and the sensing data of the first sensor, the vehicle to stop.

It may be understood that a case in which the target sensor outputs the vehicle control instruction only when both the SoC and the MCU fail is used as an example in this embodiment. This implements control of the vehicle when both the SoC and the MCU fail, for example, maintains autonomous driving of the vehicle, implements backup of an intelligent driving function, and reduces power consumption of real-time computation by the IFC. Certainly, in another embodiment, when the SoC does not fail or the MCU does not fail, an intelligent sensor may also output a vehicle control instruction. When receiving a plurality of vehicle control instructions, if it is determined that the SoC does not fail or the MCU does not fail, the VCU or the actuator may ignore the vehicle control instruction of the intelligent sensor, and execute the vehicle control instruction of the SoC or the MCU.

Optionally, in the scenario in which both the SoC and the MCU fail, because the vehicle is controlled by only the target sensor, and the target sensor has the lowest computational power, the autonomous driving level of the vehicle may drop by three levels, for example, from L5 to L2. Certainly, in another embodiment, the autonomous driving level of the vehicle may alternatively be set to another value. This is not limited in this embodiment of this application.

Based on the foregoing technical solution, when both the SoC and the MCU fail, the target sensor receives sensing data of a sensor connected thereto, and controls the vehicle based on the sensing data, for example, controls intelligent driving of the vehicle, thereby implementing redundant backup of an intelligent driving function. In addition, there is no need to deploy two intelligent driving domain controllers, so that a complex problem caused by deploying two intelligent driving domain controllers can be avoided, and development costs can be reduced.

It may be understood that, a case in which the sensor controls the vehicle when both the SoC and the MCU fail is used as an example in the foregoing embodiment. In another embodiment, the sensor may also be implemented as another apparatus, for example, a terminal side device. For example, the terminal side device may include but is not limited to a server, a desktop computer, a laptop computer, a handheld computer, a notebook computer, and an ultra-mobile personal computer (ultra-mobile personal computer, UMPC), an artificial intelligence (artificial intelligence, AI) device, a smart home device, and/or a smart city device. A specific type of the terminal side device is not specifically limited in embodiments of this application.

The foregoing mainly describes the solutions provided in embodiments of this application from the perspective of the method. It may be understood that, to implement the foregoing functions, the intelligent driving domain controller and/or the sensor include/includes a corresponding hardware structure and/or software module for performing the functions. Algorithm steps in the examples described with reference to the embodiments disclosed in this application may be implemented in embodiments of this application in a form of hardware or a combination of hardware and computer software. Whether a function is performed by hardware or hardware driven by a computer depends on particular applications and design constraint conditions of the technical solutions. A person skilled in the art may use different methods to implement the described functions for each particular application. However, it should not be considered that the implementation goes beyond the scope of the technical solutions in embodiments of this application.

In embodiments of this application, the intelligent driving domain controller and/or the sensor may be divided into functional modules based on the foregoing method examples. For example, each functional module may be obtained through division based on each corresponding function, or two or more functions may be integrated into one processing unit. The integrated unit may be implemented in a form of hardware, or may be implemented in a form of a software functional module. It should be noted that, in embodiments of this application, unit division is an example, and is merely a logical function division. In actual implementation, another division manner may be used.

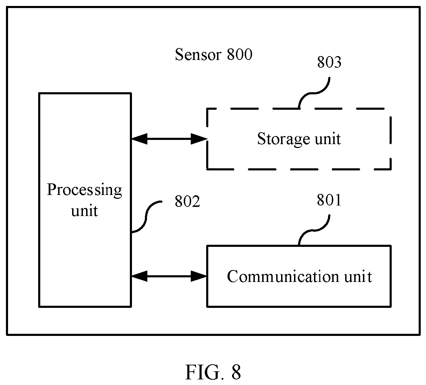

FIG. 8 is a diagram of a structure of a sensor according to an embodiment of this application. A sensor 800 may be configured to implement the method performed by the target sensor described in the foregoing method embodiments. For example, the sensor may specifically include a communication unit 801 and a processing unit 802.

The communication unit 801 is configured to support the sensor 800 in performing a communication function performed by the target sensor according to any one of the embodiments in FIG. 1 to FIG. 7. The processing unit 802 is configured to support the sensor 800 in performing a processing function performed by the target sensor according to any one of the embodiments in FIG. 1 to FIG. 7.

Optionally, the sensor 800 shown in FIG. 8 may further include a storage unit 803. The storage unit 803 stores a program or instructions. When the processing unit 802 executes the program or the instructions, the sensor 800 shown in FIG. 8 may perform the method performed by the target sensor in the foregoing method embodiments.

For technical effects of the sensor 800 shown in FIG. 8, refer to the technical effects in the foregoing method embodiments. Details are not described herein. The processing unit 802 in the sensor 800 shown in FIG. 8 may be implemented by a processor or a processor-related circuit component, and may be a processor or a processing module. The communication unit 801 may be implemented by a transceiver or a transceiver-related circuit component, and may be a transceiver or a transceiver module.

An embodiment of this application further provides a chip system. The chip system includes at least one processor and at least one interface circuit. The processor and the interface circuit may be interconnected by using a line. For example, the interface circuit may be configured to receive a signal from another apparatus. For another example, the interface circuit may be configured to send a signal to another apparatus (for example, a processor). For example, the interface circuit may read instructions stored in the memory, and send the instructions to the processor. When the instructions are executed by the processor, a sensor may be enabled to perform the steps performed by the target sensor in the foregoing embodiments, or an intelligent driving domain controller is enabled to perform the steps performed by the intelligent driving domain controller in the foregoing embodiments. Certainly, the chip system may further include another discrete device. This is not specifically limited in embodiments of this application.

An embodiment of this application further provides a computer storage medium. The computer storage medium stores computer instructions. When the computer instructions are run on a sensor, the sensor is enabled to perform the methods in the foregoing method embodiments. Alternatively, when the computer instructions are run on an intelligent driving domain controller, the intelligent driving domain controller is enabled to perform the methods in the foregoing method embodiments. The foregoing storage medium includes any medium that can store program code, such as a USB flash drive, a removable hard disk, a read-only memory (read-only memory, ROM), a random access memory (random access memory, RAM), a magnetic disk, or an optical disc.

An embodiment of this application provides a computer program product. The computer program product includes a computer program or instructions. When the computer program or the instructions are run on a computer, the computer is enabled to perform the methods in the foregoing method embodiments.

The sensor, the intelligent driving domain controller, the computer storage medium, the computer program product, or the chip provided in embodiments is configured to perform the corresponding method provided above. Therefore, for beneficial effects that can be achieved by the intelligent driving domain controller, the computer storage medium, the computer program product, or the chip, refer to the beneficial effects in the corresponding method provided above. Details are not described herein again.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. Embodiments may be combined with or referenced by each other without a conflict. The described apparatus embodiments are merely examples. For example, division into the modules or the units is merely logical function division. During actual implementation, another division manner may be used. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separate, and components displayed as units may be one or more physical units, may be located in one place, or may be distributed on different places. Some or all of the units may be selected based on actual requirements to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

The foregoing content is merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. An intelligent driving method, applied to an intelligent driving domain controller of a vehicle, wherein the intelligent driving domain controller comprises a system-on-a-chip SoC and a microcontroller unit MCU, and the method comprises:
receiving, by the SoC, first sensing data from M sensors, wherein M is greater than or equal to 2; and
sending, by the SoC, first information to a target sensor based on the first sensing data when the MCU fails, to enable the target sensor to output a first vehicle control instruction to control the vehicle, wherein the target sensor is one of the M sensors.

2. The method according to claim 1, wherein the method further comprises:
sending, by the SoC, the first information to the MCU based on the first sensing data when the MCU does not fail, to enable the MCU to output a second vehicle control instruction to control the vehicle.

3. The method according to claim 1 or 2, wherein the method further comprises:
receiving, by the MCU, second sensing data from N sensors, wherein N is less than M; and
when the SoC fails, outputting, by the MCU, a third vehicle control instruction based on the second sensing data to control the vehicle.

4. The method according to any one of claims 1 to 3, wherein the first information is a vehicle control instruction, or the first information is a sensing result obtained through calculation based on the first sensing data.

5. The method according to any one of claims 1 to 4, wherein the method further comprises:
when the MCU fails for longer than first preset duration, sending, by the SoC, second information to the target sensor, to control the vehicle to stop or stop controlling the vehicle.

6. The method according to any one of claims 1 to 5, wherein the method further comprises:
when the SoC fails for longer than second preset duration, controlling, by the MCU, the vehicle to stop or stopping controlling the vehicle.

7. The method according to any one of claims 1 to 6, wherein the M sensors comprise at least a forward radar and an intelligent front camera IFC, and the target sensor is the IFC.

8. An intelligent driving method, applied to a target sensor on a vehicle, wherein the vehicle further comprises an intelligent driving domain controller, and the method comprises:
receiving sensing data from a first sensor when both an SoC and an MCU of the intelligent driving domain controller fail; and
outputting a vehicle control instruction based on sensing data of the target sensor and the sensing data of the first sensor to control the vehicle.

9. The method according to claim 8, wherein the method further comprises:
receiving first information from the SoC when only the MCU fails; and
outputting another vehicle control instruction based on the first information to control the vehicle.

10. The method according to claim 8 or 9, wherein after the outputting the vehicle control instruction based on the sensing data of the target sensor and the sensing data of the first sensor to control the vehicle, the method further comprises:
sending, via a controller area network CAN bus, the vehicle control instruction to an actuator corresponding to the vehicle control instruction.

11. The method according to claim 9 or 10, wherein the first information is the another vehicle control instruction, or the first information is a sensing result obtained through calculation based on sensing data of M sensors, wherein M is greater than or equal to 2, and the M sensors comprise the target sensor and the first sensor.

12. The method according to any one of claims 8 to 11, wherein before the outputting the vehicle control instruction based on the sensing data of the target sensor and the sensing data of the first sensor to control the vehicle, the method further comprises:
obtaining, via the CAN bus, a compensation signal, wherein the compensation signal is used to compensate for an error of the sensing data of the target sensor caused by movement of the vehicle.

13. The method according to any one of claims 8 to 11, wherein the method further comprises:
when neither the SoC nor the MCU fails, receiving a first synchronization signal and a first compensation signal from the SoC, and receiving a second synchronization signal and a second compensation signal from the MCU;
performing time synchronization based on the first synchronization signal, and compensating, based on the first compensation signal, for an error of the sensing data of the target sensor caused by movement of the vehicle;
receiving the second synchronization signal and the second compensation signal from the MCU when the SoC fails; and
performing time synchronization based on the second synchronization signal, and compensating, based on the second compensation signal, for the error of the sensing data of the target sensor caused by movement of the vehicle.

14. The method according to any one of claims 8 to 13, wherein the method further comprises:
when both the SoC and the MCU fail for longer than preset duration, stopping controlling the vehicle or controlling the vehicle to stop based on the sensing data of the target sensor and the sensing data of the first sensor.

15. The method according to any one of claims 8 to 14, wherein the target sensor is an IFC, and the first sensor is a forward radar.

16. An intelligent driving domain controller, comprising an SoC and an MCU, wherein the SoC is configured to perform the method performed by the SoC according to any one of claims 1 to 7, and the MCU is configured to perform the method performed by the MCU according to any one of claims 1 to 7.

17. A sensor, comprising a processor, wherein the processor is configured to execute a computer program or instructions, to enable the method according to any one of claims 8 to 15 to be performed.

18. An intelligent driving system, comprising the intelligent driving domain controller according to claim 16 and the sensor according to claim 17.

19. A vehicle, comprising the intelligent driving domain controller according to claim 16 and the sensor according to claim 17.
